# EUROPEAN PATENT SPECIFICATION

(11) **EP 3 163 320 B1**
(45) Date of publication and mention of the grant of the patent: **13.12.2017**
(21) Application number: 15191489.2
(22) Date of filing: 26.10.2015
(51) Int. Cl.: G01S 17/00, G01S 17/10, G01S 17/66, G01S 17/87, G01S 17/88, G01S 7/48, H01S 3/09, B64G 1/68, G01S 17/58, F41H 13/00

(54) **SYSTEM AND METHOD FOR TRACKING AND VAPORIZING OBJECTS IN SPACE**
SYSTEM UND VERFAHREN ZUM VERFOLGEN UND VERDAMPFEN VON OBJEKTEN IM ALL
SYSTÈME ET PROCÉDÉ DE SUIVI ET DE VAPORISATION D'OBJETS DANS L'ESPACE

(43) Date of publication of application: 03.05.2017
(73) Proprietor: Fragile World Foundation, 80079 München (DE)
(72) Inventor: Fierlinger, Peter, 85748 Garching (DE); Burkert, Andreas, 85238 Petershausen (DE); Schoeller, Philipp A., 82067 Ebenhausen (DE); Plaul, Oliver, 81829 München (DE)
(74) Representative: Grünecker Patent- und Rechtsanwälte PartG mbB

(56) References cited:
- EP-A1- 1 167 997
- EP-A1- 1 168 003
- JP-A- 2011 218 834
- US-A- 4 893 923
- HARALD WIRNSBERGER ET AL: "Space debris orbit prediction errors using bi-static laser observations. Case study: ENVISAT", ADVANCES IN SPACE RESEARCH., vol. 55, no. 11, 1 June 2015 (2015-06-01), pages 2607-2615, XP055261899, GB ISSN: 0273-1177, DOI: 10.1016/j.asr.2015.02.018
- RÉMI SOULARD ET AL: "ICAN: A novel laser architecture for space debris removal", ACTA ASTRONAUTICA, vol. 105, no. 1, 1 December 2014 (2014-12-01), pages 192-200, XP055166497, ISSN: 0094-5765, DOI: 10.1016/j.actaastro.2014.09.004
- CLAUDE R PHIPPS ET AL: "Removing orbital debris with lasers", ADVANCES IN SPACE RESEARCH, PERGAMON, OXFORD, GB, vol. 49, no. 9, 6 February 2012 (2012-02-06), pages 1283-1300, XP028475315, ISSN: 0273-1177, DOI: 10.1016/J.ASR.2012.02.003 [retrieved on 2012-02-14]

## Description

The invention generally relates to a system for tracking objects in space using a coherent light source located in space. Further, the invention relates to a corresponding method for tracking objects in space.

One of the biggest achievements of mankind was the start of the first satellite into space. This was the satellite Sputnik which was launched in October 1957 by the Soviet Union. Since then, mankind sent a large number of rockets and satellites into space. As most of these rockets and satellites left parts of itself in the space around Earth, space debris remains in space until some external force changes their velocity. The number of space debris is not just increasing by rockets or satellites which are sent into space but also by existing space debris crashing into each other. These parts may have a very high velocity.

For modern society, satellites are essential as we need them for communication, exploration, navigation, broadcasting, science and many other important functions. However, these satellites are in danger of being hit by space debris which may damage or even destroy satellites. Further, space debris is also dangerous for astronauts. Small particles at a high speed become projectiles and may destroy helmets and suits of the astronauts or even injure them. Thus, it is important to find ways to remove the space debris.

The problem with space debris is that it is difficult to track those parts which have a cross-section below 10cm². Larger parts may be tracked by earthbound telescopes. Even if space debris is identified, determining the motion, such as velocity, rotation and direction is even more difficult.

An additional problem of the space debris is how to efficiently remove such objects. In this regard, many approaches have been searched. However, none of the prior art technologies are efficient enough for tracking and disarming space debris at the same time.

US 4 893 923 A discloses a coherent laser radar system in which a number of individual receiver modules are deployed in an area relatively near the targets to receive signals originating at a transmitter located at a much greater distance from the target area. The radar is particularly adapted for the midcource detection and tracking of missiles in space and differentiating between reentry vehicles and decoys. This permits a number of receivers to be positioned at separate points, each capable of receiving and analyzing reflected signals originating from a single transmitter. Direct communication between the transmitter and each receiver permits the transmitter to know at all times the location, velocity and direction of each receiver thus permitting the receivers to be positioned near the targets relative to the position of the transmitter. This in turn permits a wider divergence of the transmitted signal and markedly reduces the cost while making possible the simultaneous tracking and analysis of a number of targets thereby improving the performance of the system by a wide margin.

It is therefore the object of the invention to provide an improved method and system for tracking objects in space using a coherent light source located in space.

This object is solved by the subject matter of the independent claims.

Preferred embodiments are defined by the dependent claims.

In a preferred embodiment a method for tracking objects in space using a coherent light source located in space is provided. The method may comprise different steps, such as adapting a first optical system to emit a first beam of coherent light having a first opening angle into a first direction. The first beam of coherent light may comprise a plurality of photons and a predetermined pulse frequency.

Further, the method for tracking an object may comprise transmitting a pulse information signal to a second optical system. The pulse information signal may comprise information of the predetermined pulse frequency of said first beam of coherent light.

The second optical system may receive and detect one or more photons that are a subset of said plurality of photons being emitted by the first optical system and being reflected by an object, or that are generated by a subset of the first set of photons when interacting with the object.

The method for tracking the object further comprises determining time dependent motional parameters and/or time dependent rotational parameters of the object based on the received one or more photons and based on the pulse information signal.

In addition, the method may further be for vaporizing the tracked object. In this regard, the method may further comprise adapting the first optical system to emit a second beam of coherent light having a second opening angle into the direction according to the time dependent motional parameters and/or the rotational parameters of the object. The second opening angle may be equal to or smaller than the first opening angle. The second beam of coherent light may be adapted to at least partially vaporize said object.

In a further preferred embodiment, the second beam of coherent light may be modulated based on the motional parameters and/or the rotational parameters of the object. For example, when the rotational parameter indicates a rotation of the object, a modulation frequency of the second beam of coherent light may be set to a rotational frequency of the object so that only a subarea of the object is illuminated. When the rotational parameter indicates a rotation of the object being below a predetermined rotation threshold, no modulation may be used for the second beam.

In a further preferred embodiment, the second optical system may comprise a plurality of spatially separated optical subsystems. Each of the optical subsystems may be configured to operate independently of the other optical subsystems. The time dependent motional parameters and rotational parameters may be determined by: determining, at a plurality of times, a time duration for the first beam of laser light to reach the object and for the reflected photons to reach at least some of the plurality of optical subsystems to determine a time dependent distance between the at least some of the plurality of optical subsystems and the object, and analyzing, by at least one of the optical subsystems, a phase shift information of the received reflected one or more photons according to the information of the predetermined pulse frequency.

In a further preferred embodiment, at least one of the plurality of optical subsystems may be located on earth. In this case, the first beam of coherent light may comprise a wavelength that is substantially not absorbed by the earth atmosphere.

In a further preferred embodiment, the first optical system may comprise a free electron laser and one or more adaptive mirrors for adapting the first optical system.

In a further preferred embodiment, the method may further comprise adapting, by the first optical system, the wavelength of the beam of coherent light in order to obtain different object information for different wavelengths. The object information may comprise information of at least one of: a material consistency of the object, a material consistency of different layers of the object, a size of the object, and a state of the object.

The claimed invention further provides a corresponding system for tracking and vaporizing an object.

### BRIEF SUMMARY OF THE FIGURES

These and other objects and features of the present invention will be more fully disclosed by the following detailed description of the preferred embodiments of the invention, which is to be considered together with the accompanying drawings, wherein:
**FIG. 1** illustrates an optical system, operating in a scanning mode, according to embodiments of the present invention;
**FIG. 2** illustrates the optical system, operating in a vaporizing mode, according to embodiments of the present invention;
**FIG. 3** illustrates the optical system, operating in a vaporizing mode, according to further embodiments of the present invention;
**FIG. 4** illustrates a block diagram of an exemplary light source, according to embodiments of the present invention; and
**FIG. 5** illustrates a flow diagram of a method for tracking and vaporizing an object, according to embodiments of the present invention.

### DETAILED DESCRIPTION

According to one embodiment, a high intense light source is located in space in order to track and remove space debris. The high intense light source may be a laser, such as a free electron laser (FEL) that can be operated in at least two different modes of operation.

In a first mode of operation, the light source may be used as a device for scanning the surrounding space for objects. In this application or mode of operation, the light source may be adapted to emit a beam of coherent light into a certain direction having a rather broad opening angle.

In the second mode of operation, the light source may be used as a device for at least partially vaporizing an identified object. In this application or mode of operation, the light source may be adapted to emit a beam of light into the direction of and identified object, with the beam having a narrow angle, i.e. the least possible divergence.

In the first mode of operation, i.e. the scanning mode, the light source emits lights into a first area. A second optical system may be used to detect photons from the first area. Such photons may be photons that are emitted from the light source and reflected by an object. However, depending on the wavelength of the light emitted from the light source, the received photons at the second optical system may be photons that have been produced by the light source photons via one or more spectroscopy processes. Nevertheless, by detecting the reflected photons or the spectroscopy photons under different angles, a position of the object may be determined in a very precise manner.

For example, the methods of triangulation may be used in order to determine the position of the object. This requires at least three subsets or subsystems of the second optical system, located at different positions, respectively. In one embodiment, the subsystems of the second optical system are located also in space. However, at least one of the subsystems of the second optical system may be located on earth. This may require that the wavelength of the first optical system, when operated in scanning mode, emits lights having a wavelength that is not completely absorbed by the Earth's atmosphere.

If the above described methods of triangulation is repeated for several times, not only the position of the object may be determined, but also the time-dependent trajectory of the object, i.e. motional parameters of the object. In addition, rotational parameters of the object may be determined by detecting periodic patterns in the received light that is reflected by the rotating object. For example, the object may rotate around an axis and since most of the space debris objects are not a perfect sphere, reflectivity into a specific solid angle may periodically change during time.

In one embodiment, the size of the object may be determined as a function of the amount of reflected light.

In order to better distinguish a received light at the second optical system from background noise, the coherent lights from the first optical system may comprise a predetermined pulse frequency. This may require that pulse information is provided from the first optical system to the second optical system. In one embodiment, this may be done by transmitting a radio signal, taking into account the distance between the first optical system and the second optical system, causing a time delay.

Another advantage of the claimed invention is that coherent light may be used for scanning for objects. Thus, by analyzing the phase information of the reflected light, a relative movement of the object to the first optical system may be determined.

After necessary parameters of the object are determined to locate the object, the first optical system may be adapted to operate in the second mode of operation, i.e. to emit a second beam of light having a second opening angle into the direction according to the motional parameters and/or the rotational parameters of the object.

In one embodiment, the aim of directing the second beam of light onto the object may be to disarm the object. However different approaches of how this disarming may be achieved are possible. In one embodiment, the narrow beam of light may be emitted towards the object. If the size of the object is small enough, the energy and the amount of emitted light in the second operating mode may be efficient to completely vaporize the object.

In order to vaporize space debris, it is important to increase its temperature until it reaches the boiling point. On the other hand, as hot material in space cools down by emitting electromagnetic radiation, i.e. thermal radiation, it may be important to increase the temperature of the object within a minimum of time. Thus, in one embodiment, also a pulsed beam of laser light is used for the second mode of operation in order to deposit more energy on the object within a shorter time.

For example, it may be assumed that an object may be a sphere of aluminum with a radius of *r=1.78cm.* The reflectivity may be assumed to be *R=0.5.* In order to vaporize aluminum, one has to heat it up to *2743K.* Thus, the energy needed to completely vaporize the aluminum object can be calculated to be *543kJ.* If it is assumed that the light source is a laser with a power of *1MW,* and only *250kW* may be efficiently applied to the object, it would take approximately *2.3 seconds* in order to completely vaporize this object. However, if a pulsed mode would be used, the energy deposition can be increased by at least an order of magnitude, resulting in a required vaporizing time of approximately *0.3 seconds.*

In another example, when the object is to large in order to be completely vaporized by the laser light, different approaches may be used in order to disarm the object. In a first approach, if it is determined that the object is not or only very slowly rotating relative to the light source, the object is irradiated so that only a subarea of the object is vaporized. For example, if the object is located on an orbit and the light is emitted towards the front face of the object, only the front face starts vaporizing. In this regard, the vapor pressure at the front face of the object provides an external force that slows down the object. As a consequence, the object is no longer on the orbit but is attracted by the gravity of Earth. Thus, the object may be deflected in a controlled manner.

With a similar method, it may also be possible to deflect larger asteroids to not hit the Earth. In such a scenario, it may be possible to vaporize a lateral face of the asteroid so as to provide a further velocity component, detracting the asteroids on its way to the Earth.

In a second approach, when it is determined that the object is rotating, the information regarding the rotational speed and the rotational axis may be used in order to determine a modulation of the beam of laser light. More specifically, a modulation may be determined so as to only vaporize the same face of the object in order to provide a further velocity component to the object.

The above described and additional embodiments will now be further discussed in the discussion of the figures.

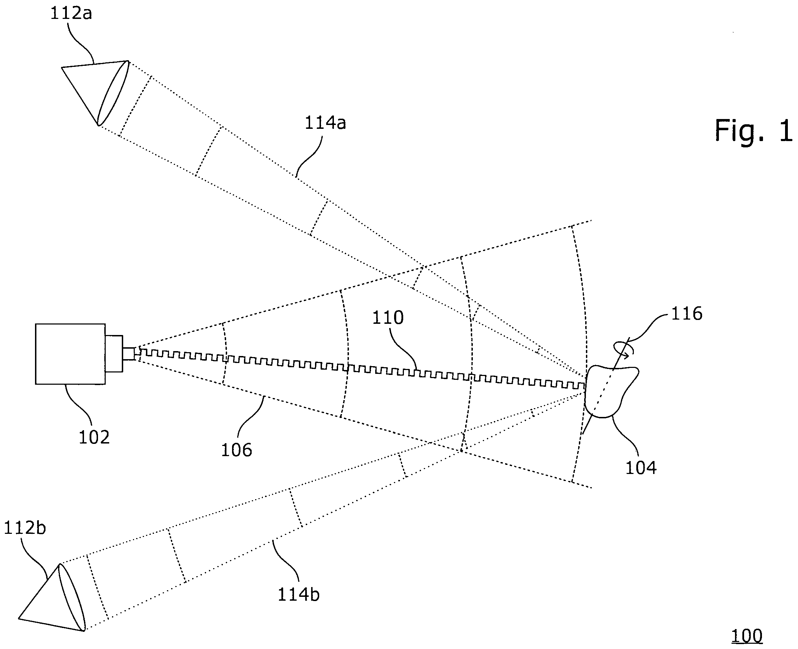

Figure 1 illustrates a system 100, comprising a first optical system 102 and a second optical system 112. The first optical system 102 may be a light source for imitating a beam of coherent light, such as a laser. In one preferred embodiment, the first optical system 102 comprises a free electron laser (FEL), however, the invention is not limited to a specific kind of coherent light source or laser.

In figure 1, the first optical system 102 is adapted to emit a first beam of coherent light 106 having a first opening angle. As can be seen in figure 1, the opening angle of the beam of light 106 is rather broad, as the first optical system 102 is operating in a scanning mode. Thus, the first optical system 102 may scan the surrounding area for objects, such as object 104. The object 104 may have motional parameters and/or rotational parameters. This means that the object 104 may have a certain velocity into a specific direction and/or may rotate with a certain rotational speed around an axis 116.

As described above, and as indicated in figure 1, the first beam of coherent light 106 may be formed of a plurality of photons and may have a predetermined pulse frequency 110. When photons of the first beam of coherent light 106 hit the surface of the object 104, depending on the reflectivity of the object 104, at least a subset of the first beam of coherent light 106 may be reflected as indicated by the light 114a and 114b. The reflected photons may then be detected by a second optical system 112.

The second optical system 112 may comprise light detectors, such as photomultipliers for receiving and detecting single photons up to a photon flux, where an intensity of the received light may be measured. However, other devices for detecting received light from the object may be used, such as using photosensitive materials that emit one or more electrons per incident photon, where the one or more electrons may be measured using channeltrons. In this manner, a high-efficiency detector for single photons may be built and utilized in the second optical system 112.

In order to more efficiently detect the reflected light waves 114 by the second optical system 112, information regarding the pulse frequency of the first beam of coherent light 106 may be transmitted to the second optical system 112. By evaluating the pulse information, the second optical system 112 may more efficiently separates the received light 114 from background light that may also be detected by the second optical system 112.

As can be seen in figure 1, the second optical system 112 may comprise more than one optical subsystem 112a and 112b. In one embodiment, at least three separate optical subsystems 112 are used for determining a time-dependent location of the object 104. With a minimum of three optical subsystems 112, a triangulation concept may be used in order to locate the object 104 relative to the first optical system 102 and relative to the second optical system 112.

In order to obtain velocity information of the object, it may be required to determine the above described distance a plurality of times. In addition to the motion opera meters, i.e. the orbits, the position, the velocity, and/or the acceleration of the objects 104, also rotational parameters may be obtained by detecting the reflected light 114 for a certain time periods. As discussed above, the object 104 may produce a characteristic pattern of the reflected light 114 when rotating around the axis 116. As the characteristic pattern in the reflected light 114 may be observed from multiple optical subsystems 112a-b, a rotational frequency and the relative alignment of the rotational axis of the object 104 may be determined.

In the same or another embodiment, at least one of the optical subsystems 112a and 112b may be located on earth, instead of being located in space. In the case that one of the optical subsystems 112a-b is located on earth, the wavelength of the first beam of coherent light 106 may be adapted so as to barely interact with the atoms and molecules of the atmosphere. However, the embodiments of the present invention are not limited to a location of the optical subsystems 112a and 112b.

In order to more efficiently determine the motional parameters and the rotational parameters, the predetermined coherence length of the first beam of light 106 may be taken into consideration. For example, by analyzing a time rate of change of the phase shift of the reflected light 114 via more than one of the optical subsystems 112a-b, it may be possible to even more precisely determine the motional parameters and the rotational parameters of the object 104.

When the required motional parameters and/or rotation opera meters of the object are determined, the first optical system 102 may be adapted to operate in a second mode of operation, as described above.

In an optional step, the alignment of the first optical system 102 may be adapted so that the emitted light points directly onto the object 104. However, in another embodiment, the alignment of the optical system 102 is adapted so that only a lens system of the first optical system 102 causes a focused beam of light 206 to be directed onto the object 104.

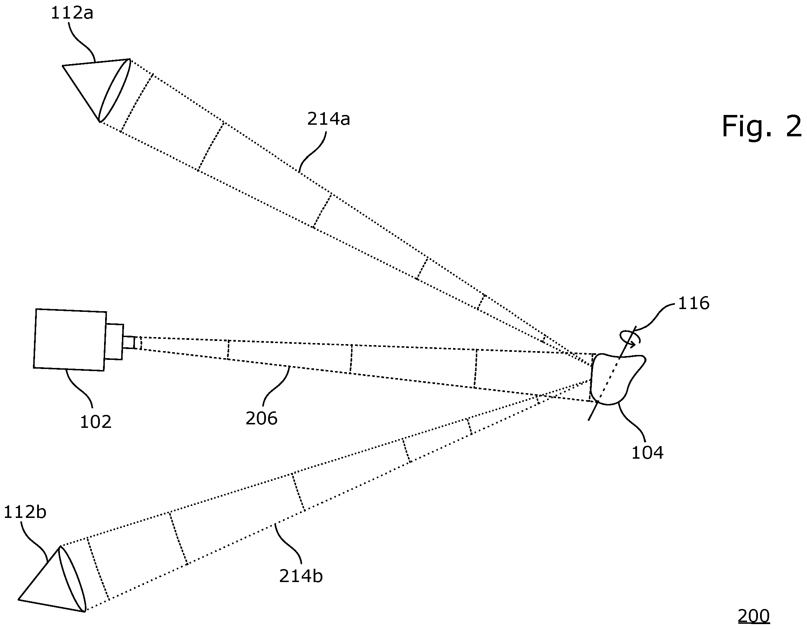

In particular, as can be seen in figure 2, the opening angle of a second beam of coherent light 206 emitted by the a first optical system 102 may be smaller than the first opening angle of the first beam of coherent light 106 when the first optical system 102 is operating in the scanning mode. As such, the intense second beam of light 206 is focused in a more intense manner onto the object 104 in order to at least partially vaporize the object 104, as described above.

As also discussed above, the second beam of light 206 may also be a pulsed light in order to more efficiently heat the object 104. Likewise, as discussed above, the second beam of light 206 may be a modulated beam according to a rotational frequency of the object 104. In one embodiment, the second optical system 112 may still observe the object 104 during the vaporizing process. This may be advantageous as it provides information as to whether the vaporizing of the object 104 was successful.

In a further embodiment, the information obtained by the second optical system 112 during the vaporizing process may be used in order to re-adapt the position and/or direction of the emitted light 206.

In still another embodiment, the information obtained by the second optical system 112 during the process of vaporizing may be used to analyze the properties of the object 104 in more detail. For example, depending on the used wavelength of the emitted second beam of light 206, different kinds of spectroscopy processes are performed, revealing different information about the object 104. Thus, in one embodiment, the wavelength of the emitted light 106 and 206 may be variably adapted by the first optical system 102.

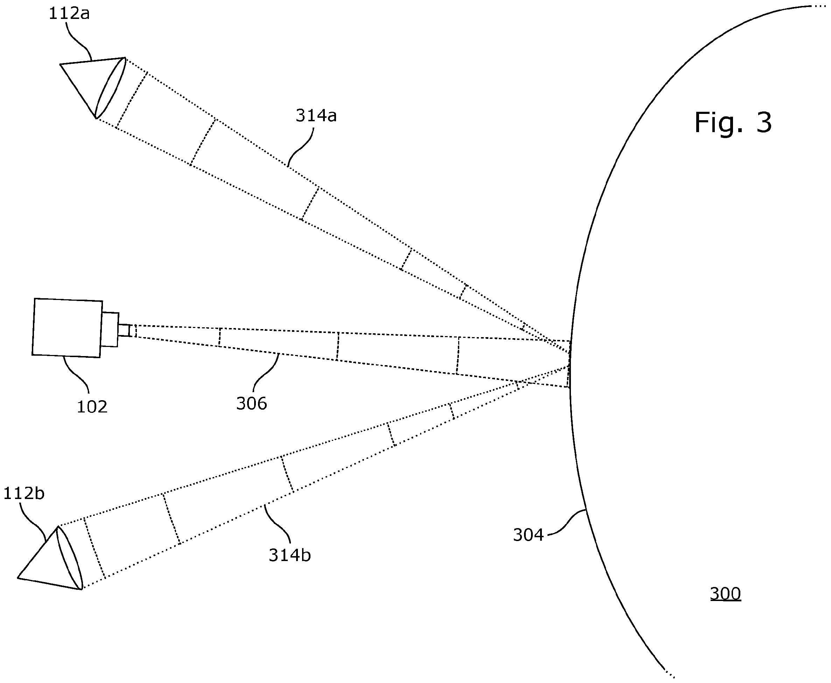

However, in another embodiment of the present invention, the second optical system 112 may be deactivated during the vaporizing step. On the other hand, as shown in figure 3, the second optical system 112 may be activated for a detailed analysis of the object 304. As indicated in figures 3, the object 304 may not be space debris in one embodiment, but may be a larger object, such as a moon or even a planet.

Thus, in these embodiments, the object of the system the system 300 in figures 3 is not to disarm the object 304 but to analyze the object 304, or at least partially analyze the object 304. For example, the energy of the emitted second beam of light 306 may be high enough to vaporize different layers of the surface of the object 304, such as the moon or another planet. Thus, spectroscopy information, depending on the used wavelength of the second beam of light 306 may be obtained as a function of the depth of the object 304.

In another embodiment, the moon or planet 304 may have an atmosphere. Thus, by adjusting the second beam of light 306 to have an appropriate wavelength, spectroscopy of the atmosphere of the moon or planet 304 may be performed.

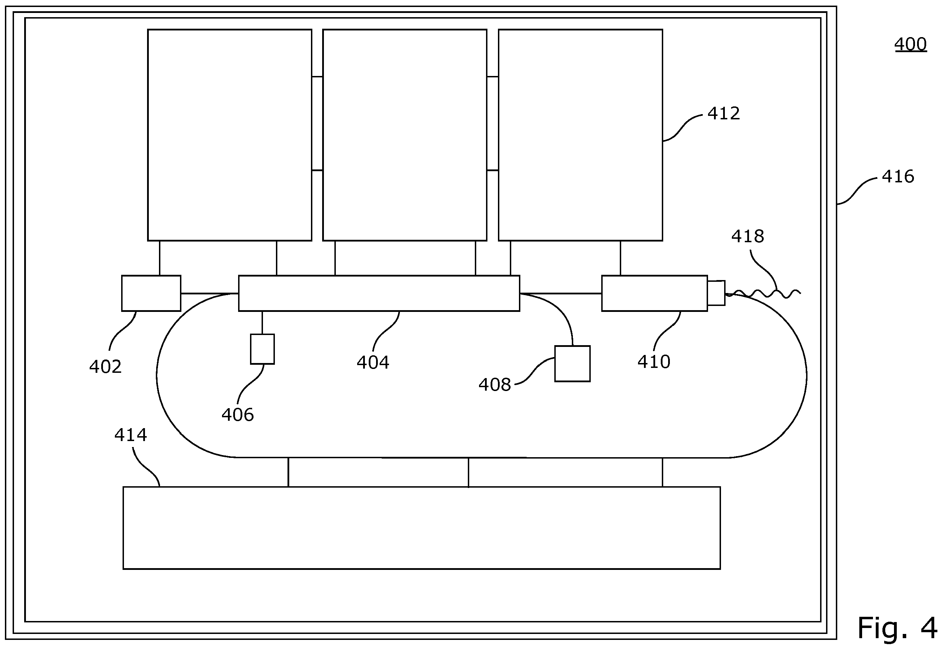

Figure 4 illustrates an exemplary system 400 comprising more details of the optical system 102, according to one embodiment of the present invention.

In the embodiment of figure 4, the electrons are produced and first accelerated in an electron gun 402. Afterwards the electrons are accelerated by an electron accelerator 404, such as a "Runzelröhre". The electrons then leave the accelerator 404 and are guided into an undulator 410 to generate the coherent light 418. After leaving the undulator 410 the electrons may be recirculated along the path 420 into the accelerator 404. This may be performed by using bending magnets (not shown) to alter the path of the electrons and quadrupole magnets (not shown) to focus the electron beam.

After the electrons exit the accelerator 404 for the second time they may be guided to a beam dump 408. This may be achieved by using an electrostatic kicker which only guides electron bunches to the beam dump 408 that have travelled through the accelerator twice.

Beside the FEL there may be some other components required in order to operate the system. These may be a cooling system 414 to control the temperature of the light source, a structure 416 of the system, a lens system to influence the light beam and a power generation system 412 of the system.

As discussed above, electron beams may be produced in the electron gun 402. The electron gun 402 may contain a thermionic cathode that generates the electron beam. The temperature of the cathode has to be high enough, so that the energy of the electrons in the cathode exceeds the work function. The work functions are in the magnitude of a few eV and are different in each material.

There may be different materials that can be used as a thermionic cathode. In one embodiment, ceriumhexaborid is used for the thermionic cathode as this material generates high current densities and has a low work function of 2.5 eV.

Since the system 400 operates in the vacuum of space, the cathode can be used in an optimal environment. This leads to a maximum output of electrons. The electron gun 402 according to one embodiment may contain a ceriumhexaborid cathode to produce the electron beam. The cathode may be integrated inside a confinement that utilizes a magnetic field. After the electrons leave the cathode the magnetic field influences them.

The magnetic field forced the electrons to circle around the magnetic field lines and to stay trapped until a respective amount of electrons is reached. At the other side of the containment may be a grid. On this grid, a rectangular signal may be applied that leads to an acceleration of the electrons. The electrons travel along the magnetic field lines to the grid and leave the containment. The frequency of this signal may be identical to the bunch repetition rate.

After the electron beam is produced in the electron gun 402, the electrons get accelerated by the accelerator 404. Many different accelerator types may be used for the present invention. In one embodiment, a "Runzelröhre" may be used for accelerating the electrons.

The "Runzelröhre" is a radio frequency (RF) linear accelerator. In this kind of accelerator, the electrons are accelerated by surfing on an electric wave. The electrons get only accelerated if they have the right phase. They get accelerated only in one fourth of the RF period. So in order to accelerate the electrons, it is important to inject them with the right phase.

Beside the acceleration of electrons, the accelerator may have another effect. While the electrons get accelerated, they may also be focused. If an electron is faster than the other electrons, it is exposed to a weaker electric field. This leads to a lower acceleration than the slower electrons. On the other hand, electrons that are slower are exposed to a stronger electric field and therefore a higher acceleration.

The "Runzelröhre" may comprise a cylindrical waveguide with iris-shaped screens inside. These chambers between two screens are called cavities. For the electrons to interact with the wave, it is important that both have the same velocity. Otherwise there would be no energy gain.

The acceleration may be in two stages. First the electrons are accelerated in an electrostatic accelerator that accelerates the electrons up to a first energy, such as 5MeV. This may be achieved by applying a first voltage, such as 5MV, to an anode. Beyond the anode, the electrons may have a velocity close to the speed of light c.

To further accelerate the electrons, the iris-shaped waveguide may be used to accelerate the electrons up to a second energy, such as 210MeV or higher. The remaining energy after the first acceleration is gained in the "Runzelröhre".

The "Runzelröhre" may be used as an energy recovery linac (ERL). ERLs are used to regain the energy of the electrons. The electrons travel through the iris-shaped waveguide, gain energy from the RF wave and afterwards pass through the undulator 410. The process in the "Runzelröhre" can be inverted. This is done by guiding the electrons back into the accelerator but with a phase shift of 180°. This shift can be achieved by adjusting the length of the electron path 420. Thus, instead of surfing on the guided wave, the electrons transfer their energy to the RF field. In the optimal case the whole energy, the electron gained during its acceleration is recovered.

After the electrons are accelerated to a predetermined energy, they enter the undulator 410 in order to produce the light 418. The undulator 410 contains a set of magnets placed in a periodic arrangement with alternating polarization. The electron beam is guided along the gap between the dipole magnets and starts to oscillate. By oscillating, the electron beam emits synchrotron radiation in a forward direction. Thus, the light 418 is produced in the undulator 410 as synchrotron radiation.

In order to change the size of the light beam 418, optical elements may be needed. For this purpose, optical lenses can be used as the wavelength of the light source may be in the optical range. The lens system may be located right after the undulator 410 to focus all photons. With the lenses, the beam can be widened to search the space for object and can be focused to at least partially vaporize them.

To transform a continuous light beam into a pulsed light beam, a Q-switch may be used. The laser light produced in the FEL may be linearly polarized. In an optical cavity, the intensity is building up. After a certain build-up time, a Q-switch may be used to change the polarization of the light in order to decouple the light from the cavity. By choosing the build-up time, a duty-cycle with pulses of high energy can be selected. For example a pulse of 1 ms every second would result in 1GW instead of 1 MW. The choice of the duty-cycle may only be limited by the quality of the optical components.

Another aspect of the invention relates to the production of energy for the system 400. There may only be limited options to produce energy in space. These may be solar power and using a nuclear reactor. Using a nuclear reactor is not practicable as the danger of an exploding reactor during the launch remains. Further reactors are also very heavy which is also a counterargument against this option. Therefore solar cells 412 may be used in one embodiment.

It is possible to build solar cells 412 with an efficiency of more than 45%. So the power generated by these cells depends on the radiation that hits the panel. The system 400 may require a power supply of 5MW for its components. To generate this amount of power an area of 8000m² may be needed.

As the above described components produce heat, it may be important to properly cool these components. The "Runzelröhre" 404 that accelerates the electrons to more than 200MeV needs to be cooled in order to work properly. The reason is that a part of the wave that propagates through the tube is entering the material and thus heating it up. This problem can be avoided by using superconducting materials like niobium. Niobium becomes superconducting at a temperature of 9K. To avoid interferences and thus energy losses, it is important to maintain a constant temperature. Every material is expanding while heating up. This leads to interferences in the cavities of the accelerator. Thus, a cooling system may be needed that keeps the tolerance of the temperature to 0.1K.

To cool the "Runzelröhre" 404 down to such low temperatures, it may be necessary to cool it with helium. The helium may be flowing in two circuits with opposite directions through the accelerator 404. The reason for this is that the coolant may hit the wall of the tube and may thus create a torque. This torque could influence the performance of the accelerator 404 and will be avoided in this manner.

The helium may be cooled down by using the Joule-Thomson process. Once the helium has the proper temperature, it may be guided to the accelerator 404. By passing the accelerator, the helium adsorbs the heat and delivers it to a heat exchanger 414. In space there may only be one way to get rid of excess heat. This is by radiation. For this reason, the heat exchanger 414 will be a plate with a big surface area. Thus, the helium may be guided along the back of the plate 414 and may transfer the heat to the plate 414. The heat is then radiated. After the flowing through the heat exchanger 414 the helium is guided back to the refrigerator where it is again cooled.

During operation of the system 400, the system may be arranged in space so that the solar panels 412 are fully covered by the sunlight. At the same time, the solar panels 412 prevent the sunlight to warm up the heat exchange plate 414.

It is important that the whole system 400 is mounted in a way that it can be aligned in any direction without requiring too much valuable fuel. Thus, in one embodiment, a support 416 using three gimbals is used to easily align the system 400. A gimbal is a pivoted support that allows the rotation of an object about a single axis. A set of three gimbals, one mounted on the other with orthogonal pivot axes, may be used to allow the system 400 mounted on the innermost gimbal to remain independent of the rotation of its support.

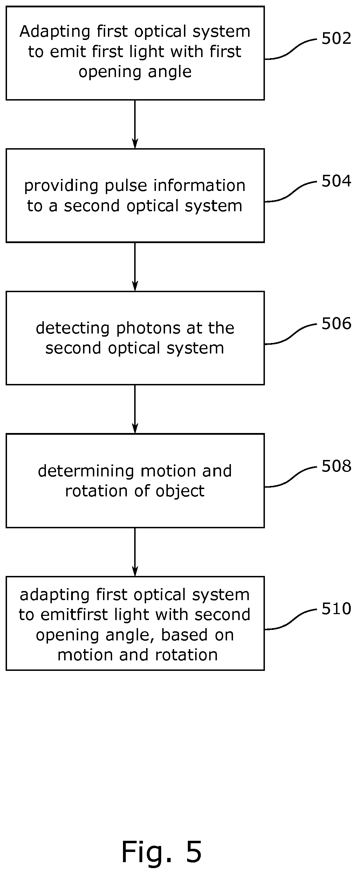

Figure 5 illustrates a flow diagram of a method for tracking and vaporizing an object, according to embodiments of the present invention. The method starts in step 502, where the first optical system 102 is adapted to emit a first beam of light 106 into a first direction. The first beam of light 106 may have a first opening angle.

In step 504, pulse information is provided to a second optical system 112. The pulse information may be provided as an electromagnetic signal that comprises information of the predetermined pulse frequency of said first beam of coherent light. In the case that the second optical system 112 is also located in space, it may also be possible to transmit the pulse information via one or more wires to the second optical system 112.

In step 506, the second optical system 112 detects photons. The detected photons may be photons that are reflected by an object 104, or may be photons that are produced by photons of the first optical system 102, when interacting with the object 104.

In step 508, the exact location, the motion and, if possible, the rotation of the object 104 is determined. For this, the pulse information provided by the first optical system 102 may be used.

In step 510, after the motional and/or the rotational parameters of the object 104 are determined, the first optical system 102 is adapted to emit a second light with a second opening angle into the direction of the object.

## Claims

1. A method for tracking objects (104) in space using a coherent light source located in space, the method comprising:
emitting, by a first optical system (102), a first beam of coherent light (106) having a first opening angle into a first direction, wherein said first optical system comprises said coherent light source, and wherein the first beam of coherent light comprises a plurality of photons and a predetermined pulse frequency;
transmitting, by said first optical system, a pulse information signal to a second optical system (112) being located in space or on earth, wherein the pulse information signal comprises information of the predetermined pulse frequency of said first beam of coherent light;
receiving and detecting, by the second optical system, one or more photons, wherein the one or more received photons are a subset of said plurality of photons being emitted by the first optical system and being reflected by an object; and
determining time dependent motional parameters and/or time dependent rotational parameters of the object based on the received one or more photons and based on the pulse information signal.

2. The method of claim 1, wherein the method is further for vaporizing said object (104), and the method further comprising:
adapting the first optical system (102) to emit a second beam of coherent light (206) having a second opening angle into the direction according to the time dependent motional parameters and/or the rotational parameters of the object, wherein the second opening angle is equal to or smaller than the first opening angle, and wherein the second beam of coherent light is adapted to at least partially vaporize said object.

3. The method of claim 2, wherein the second beam of coherent light (206) is modulated based on the motional parameters and/or the rotational parameters of the object (104), wherein:
when the rotational parameter indicates a rotation of the object, a modulation frequency of the second beam of coherent light is set to a rotational frequency of the object so that only a subarea of the object is illuminated, and
when the rotational parameter indicates a rotation of the object being below a predetermined rotation threshold, not using a modulation for the second beam.

4. The method of any of claims 1 to 3, wherein the second optical system (112) comprises a plurality of spatially separated optical subsystems, each of the optical subsystems being configured to operate independently of the other optical subsystems, and wherein the time dependent motional parameters and rotational parameters are determined by:
determining, at a plurality of times, a time duration for the first beam of laser light to reach the object (104) and for the reflected photons to reach at least some of the plurality of optical subsystems to determine a time dependent distance between the at least some of the plurality of optical subsystems and the object; and
analyzing, by at least one of the optical subsystems, a phase shift information of the received reflected one or more photons according to the information of the predetermined pulse frequency.

5. The method of claim 4, wherein at least one of the plurality of optical subsystems is located on earth and wherein the first beam of coherent light (106) comprises a wavelength that is substantially not absorbed by the earth atmosphere

6. The method of any of claims 1 to 5, wherein the first optical system (102) comprises a free electron laser and one or more adaptive mirrors for adapting the first optical system.

7. The method of any of claims 1 to 6, further comprising:
adapting, by the first optical system (102), the wavelength of the beam of coherent light in order to obtain different object information for different wavelengths, wherein the object information comprises information of at least one of: a material consistency of the object, a material consistency of different layers of the object, a size of the object, and a state of the object (104).

8. A system for tracking objects (104) in space using a coherent light source located in space, the system comprising:
a first optical system (102) comprising a coherent light source, the first optical system being adapted to emit a first beam of coherent light (106) having a first opening angle into a first direction, wherein the first beam of coherent light comprises a plurality of photons and a predetermined pulse frequency, the first optical system being further adapted to transmit a pulse information signal to a second optical system (112) being located in space or on earth, wherein the pulse information signal comprises information of the predetermined pulse frequency of said first beam of coherent light;
the second optical system adapted to receive and detect one or more photons, wherein the one or more received photons are a subset of said plurality of photons being emitted by the first optical system and being reflected by an object (104); and
a processor component adapted to determine time dependent motional parameters and/or time dependent rotational parameters of the object based on the received one or more photons and based on the pulse information signal.

9. The system of claim 8, wherein the system is further adapted to vaporize said object (104), and the system further comprising:
means for adapting the first optical system (102) to emit a second beam of coherent light (206) having a second opening angle into the direction according to the time dependent motional parameters and/or the rotational parameters of the object (104), wherein the second opening angle is equal to or smaller than the first opening angle, and wherein the second beam of coherent light is adapted to at least partially vaporize said object.

10. The system of claim 9, wherein the second beam of coherent light (206) is modulated based on the motional parameters and/or the rotational parameters of the object (104), wherein:
when the rotational parameter indicates a rotation of the object, a modulation frequency of the second beam of coherent light is set to a rotational frequency of the object so that only a subarea of the object is illuminated, and
when the rotational parameter indicates a rotation of the object being below a predetermined rotation threshold, not using a modulation for the second beam.

11. The system of any of claims 1 to 3, wherein the second optical system (112) comprises a plurality of spatially separated optical subsystems, each of the optical subsystems being configured to operate independently of the other optical subsystems, and wherein the time dependent motional parameters and rotational parameters are determined by:
determining, at a plurality of times, a time duration for the first beam of laser light to reach the object (104) and for the reflected photons to reach at least some of the plurality of optical subsystems to determine a time dependent distance between the at least some of the plurality of optical subsystems and the object; and
analyzing, by at least one of the optical subsystems, a phase shift information of the received reflected one or more photons according to the information of the predetermined pulse frequency.

12. The system of claim 11, wherein at least one of the plurality of optical subsystems is located on earth and wherein the first beam of coherent light (106) comprises a wavelength that is substantially not absorbed by the earth atmosphere

13. The system of any of claims 8 to 12, wherein the first optical system (102) comprises a free electron laser and one or more adaptive mirrors for adapting the first optical system.

14. The system of any of claims 8 to 13, wherein the first optical system (102) is further configured to adapt the wavelength of the beam of coherent light in order to obtain different object information for different wavelengths, wherein the object information comprises information of at least one of: a material consistency of the object, a material consistency of different layers of the object, a size of the object, and a state of the object (104).

## Patentansprüche

1. Verfahren zum Verfolgen von Objekten (104) im Raum unter Verwendung einer kohärenten Lichtquelle, die sich im Raum befindet, wobei das Verfahren umfasst:
Emittieren, durch ein erstes optisches System, von einem ersten Strahl von kohärenten Licht (106), das einen ersten Öffnungswinkel aufweist, in eine erste Richtung, wobei das erste optische System die kohärente Lichtquelle umfasst, und wobei der erste Strahl von kohärentem Licht eine Vielzahl von Photonen und eine vorbestimmte Pulsfrequenz umfasst;
Übertragen, durch das erste optische System, eines Pulsinformationssignals an ein zweites optisches System (112), das sich im Raum oder auf der Erde befindet, wobei das Pulsinformationssignal Informationen über die vorbestimmte Pulsfrequenz des ersten Strahls von kohärentem Licht enthält;
Empfangen und Erfassen, durch das zweite optische System, eines oder mehrerer Photonen, wobei das eine oder die mehreren empfangenen Photonen eine Untermenge der Vielzahl von Photonen sind, die von dem ersten optischen System emittiert werden und von einem Objekt reflektiert werden; und
Bestimmen von zeitabhängigen Bewegungsparametern und/oder zeitabhängigen Rotationsparametern des Objekts basierend auf dem empfangenen einen oder den mehreren Photonen und basierend auf dem Pulsinformationssignal.

2. Verfahren nach Anspruch 1, wobei das Verfahren des Weiteren zum Verdampfen des Objekts (104) dient und das Verfahren des Weiteren umfasst:
Anpassen des ersten optischen Systems (102), um einen zweiten Strahl von kohärentem Licht (206) mit einem zweiten Öffnungswinkel in die Richtung gemäß den zeitabhängigen Bewegungsparametern und/oder den Rotationsparametern des Objekts zu emittieren, wobei der zweite Öffnungswinkel gleich oder kleiner als der erste Öffnungswinkel ist und wobei der zweite Strahl von kohärentem Licht dazu ausgelegt ist, das Objekt wenigstens teilweise zu verdampfen.

3. Verfahren nach Anspruch 2, wobei der zweite Strahl von kohärentem Licht (206) basierend auf den Bewegungsparametern und/oder den Rotationsparametern des Objekts (104) moduliert wird, wobei:
wenn der Rotationsparameter eine Rotation des Objekts anzeigt, wird eine Modulationsfrequenz des zweiten Strahls von kohärentem Licht auf eine Rotationsfrequenz des Objekts gesetzt, so dass nur ein Teilbereich des Objekts beleuchtet wird, und
wenn der Rotationsparameter eine Rotation des Objekts anzeigt, die unterhalb einer vorbestimmten Rotationsschwelle liegt, wird keine Modulation für den zweiten Strahl verwendet.

4. Verfahren nach einem der Ansprüche 1 bis 3, wobei das zweite optische System (112) eine Vielzahl von räumlich getrennten optischen Subsystemen umfasst, wobei jedes der optischen Subsysteme so konfiguriert ist, dass es unabhängig von den anderen optischen Subsystemen arbeitet, und wobei die zeitabhängigen Bewegungsparameter und Rotationsparameter bestimmt werden durch:
Bestimmen, zu einer Vielzahl von Zeiten, einer Zeitdauer für den ersten Strahl des Laserlichts, um das Objekt (104) zu erreichen, und für die reflektierten Photonen, um wenigstens einige der Vielzahl von optischen Subsystemen zu erreichen, um einen zeitabhängigen Abstand zwischen den wenigstens einigen der Vielzahl von optischen Subsystemen und dem Objekt zu bestimmen; und
Analysieren, durch wenigstens einem der optischen Subsysteme, von Phasenverschiebungsinformation des empfangenen reflektierten einen oder mehrerer Photonen gemäß den Informationen der vorbestimmten Pulsfrequenz.

5. Verfahren nach Anspruch 4, wobei wenigstens eines der Vielzahl von optischen Subsystemen auf der Erde angeordnet ist und wobei der erste Strahl von kohärentem Licht (106) eine Wellenlänge aufweist, die im Wesentlichen nicht von der Erdatmosphäre absorbiert wird.

6. Verfahren nach einem der Ansprüche 1 bis 5, wobei das erste optische System (102) einen Freie-Elektronen-Laser und einen oder mehrere adaptive Spiegel zur Anpassung des ersten optischen Systems umfasst.

7. Verfahren nach einem der Ansprüche 1 bis 6, das des Weiteren umfasst:
Anpassen, durch das erste optische System (120), der Wellenlänge des Strahls von kohärentem Licht, um unterschiedliche Objektinformationen für verschiedene Wellenlängen zu erhalten, wobei die Objektinformationen Informationen umfassen von wenigstens einem von: einer Materialkonsistenz des Objekts, eine Materialkonsistenz unterschiedlicher Objektschichten, eine Größe des Objekts und einem Zustand des Objekts (104).

8. System zum Verfolgen von Objekten (104) im Raum unter Verwendung einer kohärenten Lichtquelle, die sich im Raum befindet, wobei das System umfasst:
ein erstes optisches System (102) mit einer kohärenten Lichtquelle, wobei das erste optische System angepasst ist, um einen ersten Strahl von kohärentem Licht (106) mit einem ersten Öffnungswinkel in eine erste Richtung zu emittieren, wobei der erste Strahl von kohärentem Licht eine Vielzahl von Photonen und einer vorbestimmten Pulsfrequenz aufweist, wobei das erste optische System des Weiteren dazu ausgelegt ist, ein Pulsinformationssignal zu einem zweiten optischen System (112) zu übertragen, das sich im Raum oder auf der Erde befindet, wobei das Pulsinformationssignal Informationen über die vorbestimmte Pulsfrequenz von dem ersten Strahl von kohärentem Licht umfasst;
wobei das zweite optische System angepasst ist, um ein oder mehrere Photonen zu empfangen und zu erfassen, wobei das eine oder die mehreren empfangenen Photonen eine Untermenge der Vielzahl von Photonen sind, die von dem ersten optischen System emittiert werden und von einem Objekt (104) reflektiert werden; und
eine Prozessorkomponente, die angepasst ist, zeitabhängige Bewegungsparameter und/oder zeitabhängige Rotationsparameter des Objekts basierend auf dem empfangenen einen oder den mehreren Photonen und basierend auf dem Pulsinformationssignal zu bestimmen.

9. System nach Anspruch 8, wobei das System des Weiteren dazu ausgelegt ist, das Objekt (104) zu verdampfen, und wobei das System des Weiteren umfasst:
Mittel zum Anpassen des ersten optischen Systems (102), um einen zweiten Strahl von kohärentem Licht (206) mit einem zweiten Öffnungswinkel in die Richtung gemäß den zeitabhängigen Bewegungsparametern und/oder den Rotationsparametern des Objekts zu emittieren, wobei der zweite Öffnungswinkel gleich oder kleiner als der erste Öffnungswinkel ist und wobei der zweite Strahl von kohärentem Licht dazu ausgelegt ist, das Objekt wenigstens teilweise zu verdampfen.

10. System nach Anspruch 9, wobei der zweite Strahl von kohärentem Licht (206) basierend auf den Bewegungsparametern und/oder den Rotationsparametern des Objekts (104) moduliert wird, wobei:
wenn der Rotationsparameter eine Rotation des Objekts anzeigt, wird eine Modulationsfrequenz des zweiten Strahls von kohärentem Licht auf eine Rotationsfrequenz des Objekts gesetzt, so dass nur ein Teilbereich des Objekts beleuchtet wird, und
wenn der Rotationsparameter eine Rotation des Objekts anzeigt, die unterhalb einer vorbestimmten Rotationsschwelle liegt, wird keine Modulation für den zweiten Strahl verwendet.

11. System nach einem der Ansprüche 1 bis 3, wobei das zweite optische System (112) eine Vielzahl von räumlich getrennten optischen Subsystemen umfasst, wobei jedes der optischen Subsysteme so konfiguriert ist, dass es unabhängig von den anderen optischen Subsystemen arbeitet, und wobei die zeitabhängigen Bewegungsparameter und Rotationsparameter bestimmt werden durch:
Bestimmen, zu einer Vielzahl von Zeiten, einer Zeitdauer für den ersten Strahl des Laserlichts, um das Objekt (104) zu erreichen, und für die reflektierten Photonen, um wenigstens einige der Vielzahl von optischen Subsystemen zu erreichen, um einen zeitabhängigen Abstand zwischen den wenigstens einigen der Vielzahl von optischen Subsystemen und dem Objekt zu bestimmen; und
Analysieren, durch wenigstens einem der optischen Subsysteme, von Phasenverschiebungsinformation des empfangenen reflektierten einen oder mehrerer Photonen gemäß den Informationen der vorbestimmten Pulsfrequenz.

12. System nach Anspruch 11, wobei wenigstens eines der Vielzahl von optischen Subsystemen auf der Erde angeordnet ist und wobei der erste Strahl von kohärentem Licht (106) eine Wellenlänge aufweist, die im Wesentlichen nicht von der Erdatmosphäre absorbiert wird.

13. System nach einem der Ansprüche 8 bis 12, wobei das erste optische System (102) einen Freie-Elektronen-Laser und einen oder mehrere adaptive Spiegel zur Anpassung des ersten optischen Systems umfasst.

14. System nach einem der Ansprüche 8 bis 13, wobei das erste optische System (102) des Weiteren so konfiguriert ist, dass es die Wellenlänge des Strahls von kohärentem Licht anpasst, um unterschiedliche Objektinformationen für verschiedene Wellenlängen zu erhalten, wobei die Objektinformation Informationen von wenigstens einem umfassen von: einer Materialkonsistenz des Objekts, eine Materialkonsistenz unterschiedlicher Objektschichten, eine Größe des Objekts und einem Zustand des Objekts (104).

## Revendications

1. Procédé de suivi d'objets (104) dans l'espace utilisant une source de lumière cohérente située dans l'espace, le procédé consistant à:
émettre, par un premier système optique (102), un premier faisceau de lumière cohérente (106) possédant un premier angle d'ouverture dans une première direction, dans lequel ledit premier système optique comprend ladite source de lumière cohérente et dans lequel le premier faisceau de lumière cohérente comprend une pluralité de photons et une fréquence d'impulsion prédéterminée;
la transmission, par ledit premier système optique, d'un signal d'informations d'impulsion à un second système optique (112) étant situé dans l'espace ou sur la terre, dans lequel le signal d'informations de signal comprend des informations sur la fréquence d'impulsion prédéterminée dudit premier faisceau de lumière cohérente;
recevoir et détecter, par le second système optique, un ou plusieurs photons, dans lequel lesdits un ou plusieurs photons reçus constituent un sous-ensemble de ladite pluralité de photons émis par le premier système optique et étant réfléchie par un objet; et
déterminer des paramètres de mouvement liés au temps et/ou des paramètres de rotation liés au temps de l'objet sur la base d'un ou plusieurs photons reçus et fondés sur le signal d'informations d'impulsion.

2. Procédé selon la revendication 1, dans lequel le procédé est en outre destiné à vaporiser ledit objet (104), et le procédé consistant en outre à:
adapter le premier système optique (102) pour émettre un second faisceau de lumière cohérente (206) possédant un second angle d'ouverture dans la direction en fonction des paramètres de mouvement liés au temps et/ou des paramètres de rotation liés au temps de l'objet, dans lequel le second angle d'ouverture est égal ou inférieur au premier angle d'ouverture, et dans lequel le second faisceau de lumière cohérente est prévu pour vaporiser au moins partiellement ledit objet.

3. Procédé selon la revendication 2, dans lequel le second faisceau de lumière cohérente (206) est modulé sur la base des paramètres de mouvement liés au temps et/ou des paramètres de rotation liés au temps de l'objet (104),
lorsque le paramètre de rotation indique une rotation de l'objet, une fréquence de modulation du second faisceau de lumière cohérente est réglée sur une fréquence de rotation de l'objet de sorte que seule une sous-zone de l'objet est illuminée, et
lorsque le paramètre de rotation indique qu'une rotation de l'objet est inférieure à un seuil de rotation prédéterminé, on n'utilise pas de modulation pour le second faisceau.

4. Procédé selon l'une quelconque des revendications 1 à 3, dans lequel le second système optique (112) comprend une pluralité de sous-systèmes optiques spatialement séparés, chacun des sous-systèmes optiques étant configuré pour fonctionner indépendamment des autres sous-systèmes optiques, et dans lequel les paramètres de mouvement liés au temps et les paramètres de rotation liés au temps sont déterminés comme suit :
on détermine, une pluralité de fois, une durée de temps pour que le premier faisceau de lumière laser atteigne l'objet (104) et pour que les photons réfléchis atteignent au moins une partie de la pluralité de sous-systèmes optiques pour déterminer une distance dépendante du temps entre au moins une partie de la pluralité des sous-systèmes optiques et l'objet; et
on analyse, par au moins l'un des sous-systèmes optiques, une information de déphasage desdits un ou plusieurs photons réfléchis reçus selon les informations de la fréquence d'impulsion prédéterminée.

5. Procédé selon la revendication 4, dans lequel ledit au moins un de la pluralité de sous-systèmes optiques est situé sur la terre et dans lequel le premier faisceau de lumière cohérente (106) comprend une longueur d'onde qui n'est sensiblement pas absorbée par l'atmosphère terrestre.

6. Procédé selon l'une quelconque des revendications 1 à 5, dans lequel le premier système optique (102) comprend un laser à électrons libre et un ou plusieurs rétroviseurs adaptatifs pour adapter le premier système optique.

7. Procédé selon l'une quelconque des revendications 1 à 6, consistant en outre à:
en adaptant, par le premier système optique (102), la longueur d'onde du faisceau de lumière cohérente afin d'obtenir des informations d'objet différentes pour différentes longueurs d'ondes, dans lequel l'information d'objet comprend des informations sur au moins l'un des éléments que sont: une cohérence matérielle de l'objet, une cohérence matérielle des différentes couches de l'objet, une taille de l'objet et un état de l'objet (104).

8. Système de suivi d'objets (104) dans l'espace utilisant une source de lumière cohérente située dans l'espace, le système comprenant:
un premier système optique (102) comprenant une source de lumière cohérente, le premier système optique étant prévu pour émettre un premier faisceau de lumière cohérente (106) possédant un premier angle d'ouverture dans une première direction, dans lequel le premier faisceau de lumière cohérente comprend une pluralité de photons et une fréquence d'impulsion prédéterminée, ledit premier système optique étant en outre prévu pour transmettre un signal d'informations d'impulsion à un second système optique (112) étant situé dans l'espace ou sur la terre, dans lequel le signal d'informations de signal comprend des informations sur la fréquence d'impulsion prédéterminée dudit premier faisceau de lumière cohérente;
le second système optique prévu pour recevoir et détecter un ou plusieurs photons, dans lequel lesdits un ou plusieurs photons reçus constituent un sous-ensemble de ladite pluralité de photons émis par le premier système optique et étant réfléchie par un objet (104); et
un composant processeur prévu pour déterminer des paramètres de mouvement liés au temps et/ou des paramètres de rotation liés au temps de l'objet fondés sur la base d'un ou plusieurs photons reçus et fondés sur le signal d'informations d'impulsion.

9. Système selon la revendication 8, dans lequel le système est en outre prévu pour vaporiser ledit objet (104), et le système comprenant en outre:
des moyens pour adapter le premier système optique (102) pour émettre un second faisceau de lumière cohérente (206) possédant un second angle d'ouverture dans la direction en fonction des paramètres de mouvement liés au temps et/ou des paramètres de rotation liés au temps de l'objet (104), dans lequel le second angle d'ouverture est égal ou inférieur au premier angle d'ouverture, et dans lequel le second faisceau de lumière cohérente est prévu pour vaporiser au moins partiellement ledit objet.

10. Système selon la revendication 9, dans lequel le second faisceau de lumière cohérente (206) est modulé sur la base des paramètres de mouvement liés au temps et/ou des paramètres de rotation liés au temps de l'objet (104), dans lequel:
lorsque le paramètre de rotation indique une rotation de l'objet, une fréquence de modulation du second faisceau de lumière cohérente est réglée sur une fréquence de rotation de l'objet de sorte que seule une sous-zone de l'objet est illuminée, et
lorsque le paramètre de rotation indique une rotation de l'objet inférieure à un seuil de rotation prédéterminé, on n'utilise pas de modulation pour le second faisceau.

11. Procédé selon l'une quelconque des revendications 1 à 3, dans lequel le second système optique (112) comprend une pluralité de sous-systèmes optiques spatialement séparés, chacun des sous-systèmes optiques étant configuré pour fonctionner indépendamment des autres sous-systèmes optiques, et dans lequel les paramètres de mouvement liés du temps et les paramètres de rotation liés au temps sont déterminés par:
déterminer, une pluralité de fois, une durée de temps pour que le premier faisceau de lumière laser atteigne l'objet (104) et pour que les photons réfléchis atteignent au moins une partie de la pluralité de sous-systèmes optiques pour déterminer une distance dépendante du temps entre au moins une partie de la pluralité des sous-systèmes optiques et l'objet; et analyser, par au moins l'un des sous-systèmes optiques, une information de déphasage desdits un ou plusieurs photons réfléchis reçus selon les informations de la fréquence d'impulsion prédéterminée.

12. Système selon la revendication 11, dans lequel ledit au moins un de la pluralité de sous-systèmes optiques est situé sur la terre et dans lequel le premier faisceau de lumière cohérente (106) comprend une longueur d'onde qui n'est sensiblement pas absorbée par l'atmosphère terrestre.

13. Système selon l'une quelconque des revendications 8 à 12, dans lequel le premier système optique (102) comprend un laser à électrons libre et un ou plusieurs rétroviseurs adaptatifs pour adapter le premier système optique.

14. Système selon l'une des revendications 8 à 13, dans lequel le premier système optique (102) est en outre configuré pour adapter la longueur d'onde du faisceau de lumière cohérente afin d'obtenir des informations d'objet différentes pour différentes longueurs d'ondes, dans lequel l'information d'objet comprend des informations sur au moins l'un des éléments que sont: une cohérence matérielle de l'objet, une cohérence matérielle des différentes couches de l'objet, une taille de l'objet et un état de l'objet (104).
